(19) Europäisches Patentamt
European Patent Office
Office européen des brevets

(11) **EP 1 570 326 B1**

(12) **FASCICULE DE BREVET EUROPEEN**

(45) Date de publication et mention
de la délivrance du brevet:
**25.10.2017 Bulletin 2017/43**

(51) Int Cl.:
***G05D 1/08*** (2006.01)

(21) Numéro de dépôt: **03815096.7**

(86) Numéro de dépôt international:
**PCT/FR2003/003637**

(22) Date de dépôt: **09.12.2003**

(87) Numéro de publication internationale:
**WO 2004/063824 (29.07.2004 Gazette 2004/31)**

(54) **PROCEDE ET DISPOSITIF DE PILOTAGE D'UN ENGIN ORIENTABLE AU MOYEN D'UN ACTIONNEUR ASSERVI EN ATTITUDE SUR UNE TRAJECTOIRE**

**VERFAHREN UND VORRICHTUNG ZUR STEUERUNG EINES KÖRPERS, DER MITTELS EINEM STELLGLIED SCHWENKBAR UND AUF EINE TRAJEKTORIE LAGEGEREGELT IST**

**METHOD AND DEVICE FOR PILOTING A STEERABLE CRAFT USING AN ACTUATOR SERVOCONTROLLED IN ATTITUDE ON A TRAJECTORY**

(84) Etats contractants désignés:
**DE ES GB IT**

(30) Priorité: **10.12.2002 FR 0215588**

(43) Date de publication de la demande:
**07.09.2005 Bulletin 2005/36**

(73) Titulaire: **Airbus Safran Launchers SAS**
**75015 Paris (FR)**

(72) Inventeur: **MARTINEZ, Didier**
**F-78920 Ecquevilly (FR)**

(74) Mandataire: **Audier, Philippe André et al**
**BREVALEX**
**95 rue d'Amsterdam**
**75378 Paris Cedex 8 (FR)**

(56) Documents cités:
**US-A- 4 659 035    US-A- 5 259 569**
**US-A- 5 875 993**

• **THUKRAL A ET AL: "A SLIDING MODE MISSILE PITCH AUTOPILOT SYNTHESIS FOR HIGH ANGLE OF ATTACK MANEUVERING" IEEE TRANSACTIONS ON CONTROL SYSTEMS TECHNOLOGY, IEEE INC. NEW YORK, US, vol. 6, no. 3, 1 mai 1998 (1998-05-01), pages 359-371, XP000765934 ISSN: 1063-6536**

**Description**

L'invention concerne un procédé et un dispositif pour le contrôle en pilotage d'un engin propulsé qui est muni de moyens de commande en orientation, notamment un lanceur muni de tuyères orientables.

Rappels

Pour le contrôle de vol des lanceurs, on distingue le guidage et le pilotage. Grossièrement on peut dire que :

- le guidage donne les instructions permettant d'accomplir la mission (consignes d'attitudes). Ces instructions permettent de définir le mouvement du centre de gravité du lanceur pour que celui-ci atteigne une cible prédéterminée (orbite de transfert généralement) ;
- le pilotage suit les instructions fournies par le guidage en stabilisant le mouvement du lanceur autour de son centre de gravité et en s'adaptant aux variations de l'environnement extérieur (perturbations telles que vent, rafale, ...) et intérieur (dispersions et méconnaissances sur les paramètres du lanceur, ...).

On peut affiner les deux propositions précédentes en disant que :

A partir de la connaissance du point cible et de la position courante du lanceur mesurée par des capteurs inertiels, le guidage calcule la trajectoire que doit suivre le repère de consigne d'attitude du lanceur (son origine est fixée sur le centre de gravité du lanceur et un de ses axes donne la direction que doit suivre l'axe de l'engin ; les mesures inertielles du lanceur fournissent les attitudes du lanceur définies dans un repère supposé galiléen choisi fixe au sol).

Lorsque le lanceur n'est soumis à aucune perturbation et que la boucle de pilotage répond instantanément, l'axe de l'engin est confondu avec un des axes du repère de consigne.

Le pilotage est une boucle d'asservissement ayant pour but premier de stabiliser les mouvements du lanceur autour de son centre de gravité (notion de stabilité), typiquement en ajustant l'orientation de la poussée. D'autre part, le pilotage réalise dans la mesure du possible la consigne d'attitude envoyée par le guidage (le pilotage est un système asservi "suiveur") et assure une certaine immunité du lanceur face aux perturbations qu'il est susceptible de rencontrer (le pilotage est une boucle de régulation). Pour cela, la fonction pilotage, à partir des mesures inertielles d'attitudes (les mêmes que celles utilisées par le guidage), détermine l'orientation convenable de la poussée.

Une perturbation telle que le vent perturbe le vol du lanceur en générant un mouvement autour de son centre de gravité. En réalité, le vent génère aussi un mouvement d'ensemble du lanceur (mouvement en translation ou dérive). Comme le guidage tient compte du point courant du lanceur (à l'aide des mesures inertielles) pour établir une nouvelle trajectoire jusqu'au point cible, il n'est pas faux de considérer uniquement les mouvements autour du centre de gravité pour l'établissement des performances de la fonction de pilotage.

La fonction pilotage doit tenir compte de certaines particularités dont le fait, notamment, que par nature, le lanceur est un système non stationnaire. Ses caractéristiques physiques (position du centre de gravité, masse, inertie) et aérodynamiques évoluent en fonction du vol. Des phases transitoires vont venir interagir avec la fonction pilotage, parmi lesquelles la séparation d'étage, la présence de perturbations externes (vent) et internes (excentrement de la poussée par exemple). Enfin, comme tout système physique, les paramètres du lanceur sont affectés d'incertitudes.

La fonction pilotage est établie à partir d'un cahier des charges tenant compte explicitement des éléments précédents. Ce cahier des charges est typiquement le suivant :

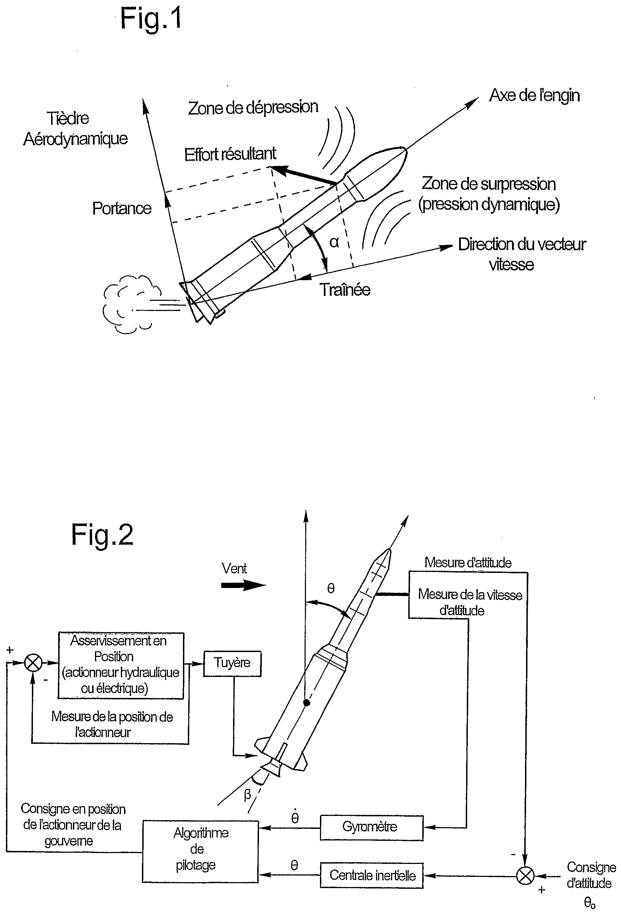

- stabiliser le lanceur
- Rattraper le lanceur et minimiser l'incidence $\alpha$ en phase de vol atmosphérique (voir figure 1).
- Suivre la consigne d'attitude générée par le guidage
- Rejeter les perturbations externes et internes
- Tenir compte des performances de la servo-gouverne

L'algorithme de pilotage est généralement intégré sous la forme d'équations récurrentes dans un calculateur numérique. L'algorithme de guidage, à partir des informations fournies par les détecteurs (attitudes, vitesses d'attitudes, accélérations) et de la navigation, calcule les consignes d'attitude que doit réaliser la boucle de pilotage, et qui servent donc à l'algorithme de pilotage.

En général, les lois de pilotage sont déterminées en supposant un découplage des axes tangage, lacet et roulis. Cette hypothèse permet de synthétiser la loi en utilisant un modèle un-axe valable aux petits angles. L'effet du couplage des trois lois (une pour chaque axe) est vérifié a posteriori en simulation trois-axes.

La figure 2 établit le schéma fonctionnel un-axe de la loi de pilotage. L'algorithme de pilotage est vu comme une boîte "noire" disposant d'informations provenant des détecteurs du lanceur (centrale inertielle pour la mesure d'attitude et gyromètre pour la mesure de la vitesse d'attitude) et définissant une commande pour l'actionneur un-axe, ici une tuyère.

La représentation un-axe suppose que le mouvement du lanceur est un mouvement plan. D'autre part, l'actionneur est asservi en position. Il rallie une position équivalente à la consigne de braquage traduite en élongation.

Etat de la technique

La principale difficulté que rencontre le concepteur de l'ensemble de pilotage est la retranscription des objectifs physiques que doit satisfaire la loi de pilotage pour déduire un critère mathématique qui peut ensuite être optimisé. Cette retranscription nécessite de contourner la nature physique des objectifs pour trouver une représentation mathématique adéquate.

A titre d'exemple, la stabilité (d'un point de vue physique) est constatée par la qualité d'amortissement de la réponse temporelle de la boucle de pilotage soumise à une perturbation ou à une consigne. Mathématiquement, on peut aussi dire que le degré de stabilité (valeur de l'amortissement) est lié au coefficient de surtension de la boucle de pilotage (résonance de la boucle de pilotage à une fréquence donnée). La relation explicite entre l'amortissement et le coefficient de surtension n'existe que pour des systèmes dits académiques (systèmes du second ordre).

Malgré ces restrictions, les synthèses actuelles de lois de pilotage utilisent la notion de surtension plutôt que d'amortissement pour prendre en compte un objectif de stabilité car celle-ci s'adapte très bien aux critères établis à partir de la minimisation d'une norme mathématique. Comme la relation entre surtension et amortissement n'est pas directe, ce n'est qu'a posteriori par simulation temporelle, qu'on constate l'amortissement.

Les lois de pilotage connues utilisent les algorithmes de synthèse suivants :

- la méthode LQG (A4,M45,A5),
- la méthode H $\infty$ (A5).

Chaque algorithme propose des paramètres de synthèse permettant d'optimiser la loi pour que celle-ci réponde aux exigences et aux contraintes requises pour le pilotage (stabilité, performance en rattrapage, robustesse en stabilité et en performance).

Les méthodes de synthèse précédentes cherchent à globaliser les différents objectifs en utilisant la notion de système standard. Un grand nombre de problèmes d'analyse aussi bien que de synthèse de commande peuvent être écrits par un seul et même schéma standard sur lequel il est possible de formuler les objectifs de la lois sous la forme d'un critère mathématique dont on cherche à minimiser la norme (norme $H_2$ ou $H\infty$). La notion de problème standard est donc extrêmement puissante pour globaliser les objectifs sous la forme d'un critère mathématique unique. Cependant, cette globalisation se paie en s'éloignant du sens physique que l'on peut donner au critère résultant.

D'autre part, la mise sous forme standard engendre généralement une complexité de l'algorithme. Les paramètres de synthèse n'étant pas forcément adaptés à la résolution du problème posé, on est obligé de se donner des degrés de liberté supplémentaires (d'où une augmentation de l'ordre) pour retranscrire correctement les objectifs visés.

Les méthodes modernes actuellement utilisées apportent un plus incontestable dans l'analyse et la synthèse des objectifs d'une loi de commande. Par contre, le critère résultant à partir duquel la synthèse de la loi sera effectuée, conduit à mettre en place une procédure "essai-erreur" pour converger vers un résultat satisfaisant.

En effet, les solutions obtenues avec ces algorithmes ne permettent pas d'obtenir une relation entre le comportement en fréquence et le comportement temporel autrement que par simulation, en particulier le fort niveau de surtension de la boucle fermée corrélé avec un amortissement convenable de cette dernière. On ne peut donc rechercher la loi optimale qu'en itérations successives "synthèse-simulation-vérification". US4659035 divulgue un procédé et un dispositif de pilotage en vol d'un engin propulsé muni d'un actionneur orientable.

Problème technique et présentation de l'invention

L'invention a pour objet un procédé et un dispositif de pilotage d'un engin orientable, asservi en attitude sur une trajectoire et soumis à des perturbations extérieures, mettant en oeuvre un algorithme de pilotage dont les paramètres peuvent être corrélés à des objectifs physiques fixés pour le pilotage.

Elle propose à cet effet un procédé de pilotage conforme à la revendication 1.

Elle propose de même un dispositif de pilotage adapté à la mise en oeuvre du procédé tel que décrit ci-dessus, comportant une entrée recevant au moins une mesure en attitude de tangage, une sortie destinée à appliquer une commande d'un actionneur, au moins une boucle d'asservissement en tangage connectée entre cette entrée et cette sortie et comportant une filtre correcteur du premier ordre, un terme de transfert comportant des paramètres caractéristiques de l'engin et des perturbations extérieures, un gain en attitude et un gain en vitesse d'attitude.

On peut noter que le choix d'une loi de pilotage aussi simple va a priori à l'encontre de l'analyse actuelle de l'homme de métier selon laquelle un algorithme simple, donc avec peu de paramètres, est peu adapté à un bon pilotage. Pourtant, contre toute attente, le choix d'une loi aussi simple est <u>apparu</u> permettre l'élaboration de lois permettant de corréler, compte-tenu de certaines simplifications de calcul par exemple par développement limité de la boucle fermée, les paramètres d'une telle loi à des paramètres physiques tels que l'amortissement (donc, la stabilité) et la rapidité de l'asservissement (donc des performances temporelles), au gain en attitude autour de l'axe considéré, ainsi qu'à des paramètres physiques de la modélisation.

<u>Liste des figures</u>

Les objets, caractéristiques et avantages de l'invention seront décrits en référence aux figures sur lesquelles:

- la figure 1 est un schéma classique montrant le régime des contraintes sur un engin soumis à une pression dynamique,
- la figure 2 est un schéma classique d'un système de pilotage un-axe,
- la figure 3 est un schéma classique définissant divers angles, pour un axe donné,
- la figure 4 est un schéma d'une architecture générique d'une loi de pilotage analytique utilisée selon l'invention, pour un axe donné,
- la figure 5 en est une variante, dans le cas où la vitesse angulaire autour de l'axe considéré n'est pas mesurée,
- la figure 6 est une courbe corrélant le gain et la phase de la boucle ouverte dans le cas nominal et dans les cas dits BF et HF,
- les figures 7 et 8 sont des courbes donnant la réponse en attitude, braquage et incidence de la boucle fermée de pilotage pour le BF ($A6_{min}$, $K1_{max}$) et HF ($A6_{max}$, $K1_{min}$).

<u>Description détaillée</u>

Selon l'invention, on utilise l'algorithme de pilotage strictement nécessaire, en terme de complexité, pour assurer le pilotage d'un engin.

L'algorithme repose sur une structure générique dont les paramètres sont calculés de manière formelle en fonction de ceux de l'engin à piloter et des caractéristiques désirées du pilotage (suivi de trajectoire, minimisation de l'incidence, phases transitoires, ...). La loi tient compte explicitement des incertitudes des paramètres de l'engin et d'un retard de chaîne globalisé (retard induit par la dynamique de l'actionneur + retard des capteurs + retard dû à l'échantillonnage).

Cette loi est applicable dans un cadre non stationnaire (évolution des paramètres du lanceur). La loi non stationnaire est obtenue rapidement car les paramètres de celle-ci sont formels. Compte tenu de la structure générique, il n'y a pas de problèmes associés aux techniques d'interpolation largement utilisées dans les pilotages des lanceurs.

L'apport indéniable de cette méthode est que les paramètres de synthèse sont des paramètres physiques de haut niveau (amortissement de la boucle fermée, bande passante,). On sait associer à ces paramètres une grandeur physique et un objectif correspondants. Le réglage est donc obtenu directement à partir d'exigences physiques exprimées par le concepteur.

Cela ressort des explications suivantes qui, par mesure de simplifications, se limitent au pilotage du mode rigide d'un engin. La présence éventuelle des modes souples peut être prise en compte en choisissant une politique "prudente", c'est-à-dire en évitant d'exciter les modes souples par le gain de boucle de la loi de pilotage (par ajout d'un filtre atténuateur par exemple).

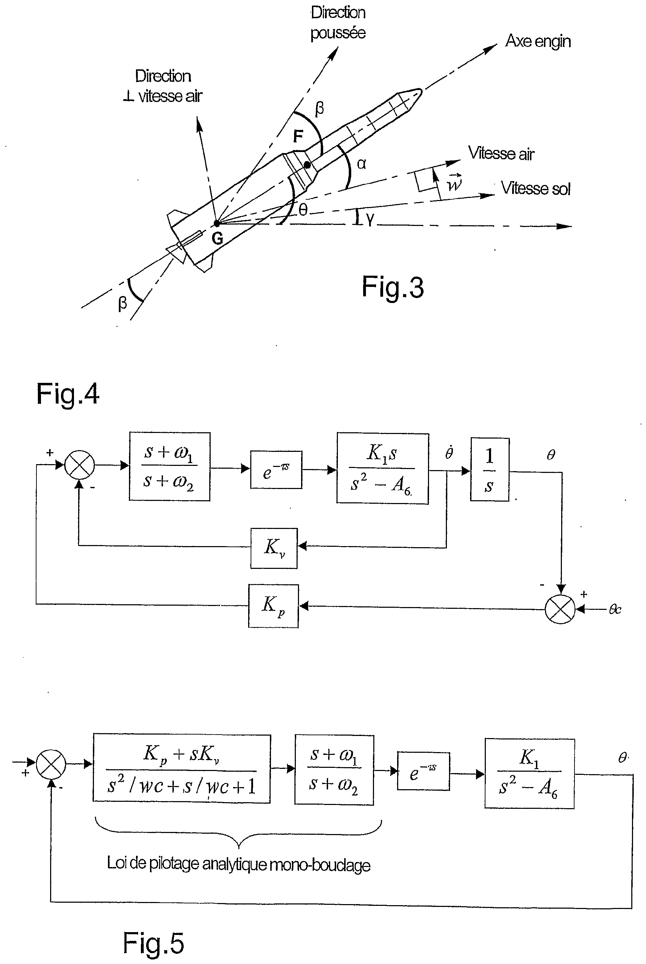

L'établissement d'une loi de pilotage nécessite l'introduction d'un modèle du lanceur appelé modèle de synthèse. La dynamique de boucle ouverte non corrigée peut être représentée par deux équations couplées décrivant les mouvements d'attitude et de dérive du lanceur (cf. fig. 3).

L'établissement de la loi de pilotage nécessite le choix d'un modèle approprié de l'engin appelé modèle de synthèse.

La dynamique de boucle ouverte non corrigée peut être représentée, en référence aux grandeurs définies à la figure 3, par deux équations couplées décrivant les mouvements d'attitude et de dérive de l'engin.

Tout d'abord, en se limitant aux petits angles, le moment en tangage peut être défini par les équations (1) de l'annexe tandis que les forces transverses par rapport à l'axe de la vitesse de l'air peuvent être définies par les équations (2).

Par ailleurs, les divers angles de la figure 3 sont liés par l'équation (3) qui, après dérivation par rapport au temps, donne les équations (4).

Après élimination de $\gamma$ entre les équations (2) et (4) on obtient le système d'équations (5) où s est la variable de Laplace.

Si on suppose que les termes identifiés dans la condition (C) sont petits pour les valeurs de ce ces contenus dans la bande passante de la boucle de pilotage, on peut approcher l'expression (5) par l'expression (6).

Cette expression montre que le système est d'ordre 2 avec une dynamique du premier ordre, instable à la pulsation $\sqrt{A_6}$.

Le système d'équations (6) constitue le modèle de synthèse à partir duquel vont être établies les bases de la synthèse analytique.

Il en découle que le transfert de commande, c'est-à-dire le transfert entre la variable contrôlée ($\theta$) et la commande (braquage $\beta$) s'exprime par le terme $K_1/(s^2-A_6)$.

Les comportements de la servo-gouverne et de la chaîne de mesure peuvent être modélisés par un retard pur global de chaîne, $\tau$, en série avec le transfert de commande, d'où l'expression (7), où G' représente, du point de vue automatique, une représentation mathématique du système physique que l'on veut boucler.

Le retard pur a, dans l'expression précitée, été approché par une approximation de PADE d'ordre 1.

Le bouclage est réalisé en sorte que la boucle fermée correspondante répondre aux objectifs de stabilité et de performance attendus.

<u>Exemples d'architectures génériques de la loi de pilotage analytique.</u>

La figure 4 montre l'architecture générique de la loi de pilotage analytique. Elle est présentée en supposant que les mesures en attitude mais aussi en vitesse d'attitude sont accessibles mais, comme cela apparaîtra plus loin, cette hypothèse ne constitue pas une limitation de la méthode.

Dans cette architecture, le retard $\tau$ somme le retard de chaîne, le retard induit par *l'échantillonage-blocage* ainsi que le retard équivalent au déphasage de la gouverne. Ce retard peut aussi inclure le déphasage d'un filtre destiné à atténuer localement le gain de boucle de la loi de pilotage pour assurer une robustesse en gain d'un mode souple lanceur.

On impose un correcteur du premier ordre dans la chaîne directe $\dfrac{s+\omega_1}{s+\omega_2}$ et un gain en vitesse d'attitude ($K_v$) et un gain en attitude ($K_p$). L'ordre de la loi de pilotage est donc égal à 1.

On évalue la première dynamique du procédé en boucle fermée pour fixer cette dernière sur un modèle du 2ème ordre de paramètres ($\zeta,\omega_n$). Cette politique permet de condenser le compromis *performance-stabilité* d'une manière élégante. L'amortissement induit un certain degré de stabilité tandis que $\omega_n$ (rapidité de l'asservissement) engendre des performances temporelles. Les paramètres ($\zeta,\omega_n$) constituent donc les paramètres de réglage de « haut niveau ».

On effectue ensuite un développement limité de la boucle fermée jusqu'à l'ordre 3. On obtient un système de trois équations à partir desquelles trois des quatre paramètres de réglage de la loi de pilotage ($K_v$, $\omega_1$, $\omega_2$) sont déduits en fonction de ($K_p$, $\omega_n$, $\zeta$) par les équations (8).

Afin d'éviter une certaine lourdeur de l'exposé, les solutions précédentes ont été établies sans tenir compte du retard global de la boucle $\tau$. En présence de celui-ci, ces dernières sont nettement plus complexes. Cependant, les solutions existent toujours et peuvent être aisément implantées au coeur d'un logiciel de synthèse de loi. Les remarques suivantes peuvent être formulées :

- Le pôle du correcteur de la chaîne directe est instable ($\omega_2 < 0$).
- Les paramètres ($K_v$, $\omega_1$, $\omega_2$) sont fonction de Kp. D'un point de vue mathématique, on aurait pu choisir de déterminer $K_p$ et deux autres paramètres en fonction du quatrième. Cependant, il est plus judicieux de laisser $K_p$ comme paramètre libre car celui-ci peut être choisi indépendamment de la dynamique de boucle fermée. Une valeur nulle de Kp privilégiera une minimisation de l'incidence de l'engin tandis qu'une valeur non nulle engendrera un suivi et une régulation de l'attitude du lanceur.

- Le zéro du correcteur compense la dynamique stable de l'engin $\left(\omega_1 = \sqrt{A_6}\right)$.

- Pour A6 = 0, le pôle et le zéro du correcteur de la chaîne directe tendent vers 0. La stabilité du système est assurée par une avance de phase bien connue des techniques classiques de commande et définie par $K_p + sK_v$.

La détermination des paramètres de la loi montre que ceux-ci ont été calculés à partir de paramètres de haut niveau (amortissement et rapidité de la boucle fermée). Cela nous permet d'établir le lien entre cet amortissement et la marge de stabilité de l'asservissement exprimée sous la forme d'une marge de gain $M_0$ (rappelons que la marge de gain est la valeur du gain de la boucle ouverte lorsque l'entrée et la sortie de cette dernière sont déphasées de 180°, la juste instabilité étant obtenue pour une valeur de la marge de gain = 1) donnée par l'équation (9).

Nous observons que la marge de gain est affine en $\zeta$ (amortissement de la boucle fermée). Notamment, elle est minimale pour un gain en attitude nul ($K_p$ = 0). Sa valeur est donnée par l'expression (10).

Si on choisit une dynamique de boucle fermée définie par $\omega_n = \sqrt{A_6}$ (dans ce cas, le lanceur est stabilisé), la marge de gain s'exprime par l'expression (11).

Cette expression précédente établit le lien direct entre l'amortissement et la marge de stabilité.

La méthode précédente est applicable même si la mesure de vitesse d'attitude n'est pas accessible. Dans ce cas, on estime cette dernière par un filtre estimateur de type passe-haut propre (existence d'un terme de transmission directe aux hautes fréquences) ou strictement propre (coupure du gain de filtre aux hautes fréquences avec une pente de 20 dB par décade au moins). Choisissons un filtre passe-haut avec une coupure de 20 dB par décade. Son expression est définie par l'équation (12).

La loi de pilotage devient alors une loi mono bouclage dont l'architecture est définie par la figure 5.

Comme pour le cas avec retour de vitesse d'attitude, les expressions de la loi de pilotage ($\omega_1$, $\omega_2$, $K_v$) peuvent être entièrement déterminées par développement de la boucle fermée à l'ordre 3 et en fonction des paramètres $K_p$, $\omega_n$, $\zeta$, $\omega_c$ et $\tau$.

Choix des paramètres de réglage

Le suivi d'attitude engendre forcément une prise d'incidence pouvant être gênante du point de vue des efforts généraux appliqués sur le lanceur. En conséquence, le choix du gain en attitude est fait de la manière suivante :

Une valeur non nulle de Kp devra être fixée si on désire un bon suivi d'attitude (décollage, phase de vol hors atmosphère).

Une valeur faible ou nulle de Kp devra être choisie pour minimiser l'incidence dans des phases de vol critiques comme celles correspondant à la pression dynamique maximale.

La valeur de $\omega_n$ détermine la rapidité de contre réaction de la boucle de pilotage. La pulsation $\omega_n$ doit être convenablement sélectionnée pour que le rattrapage du lanceur à la pression dynamique maximale soit compatible avec l'incidence admissible et les performances de la servogouverne. Le paramètre de réglage $\omega_n$ est donc étroitement lié avec l'objectif de performance de la loi de pilotage. Le choix de $\omega_n$ tiendra compte des incertitudes sur les paramètres du lanceur (objectif de robustesse en performance).

Les objectifs de stabilité et de robustesse en stabilité sont fixés par le paramètre $\zeta$ de manière à ce que tous les lanceurs définis par les variations des paramètres $A_6$ et $K_1$ soient stabilisés avec un amortissement au moins égal à l'amortissement spécifié par le concepteur.

Evolution non stationnaire de la loi

Compte tenu des différentes contraintes intervenant au cours du vol (décollage, suivi de trajectoire, stabilité de l'engin aux phases critiques, précision d'injection en orbite (lanceur civil) ou de tir (missile), la loi la plus intéressante résulte d'une interpolation de plusieurs lois linéaires calculées à différents instants du vol. Les paramètres de la loi deviennent alors des fonctions du temps. La structure du correcteur étant générique, l'interpolation de ces paramètres peut s'effectuer de manière directe, ceux-ci gardant le même sens physique d'un instant de vol à un autre.

A un instant de vol t, on définit :

- les paramètres du lanceur $A_6(t)$ et $K_1(t)$,
- un gain en attitude Kp(t),
- une rapidité de la boucle de pilotage $\omega_n(t)$,
- un amortissement $\zeta$ (t) qui peut être choisi constant pour tout le vol.

Les paramètres de la loi correspondant à l'instant t sont évalués à partir des formules analytiques fournies par le développement limité de la boucle fermée.

Le processus de synthèse est réitéré pour n points de vol de l'étage considéré. La loi globale non stationnaire est obtenue en interpolant les n lois stationnaires.

Elargissement de la structure de la loi

La loi analytique a deux formes génériques de base selon que l'on dispose ou non d'un retour de vitesse d'attitude, données par les équations (13) et (14).

Ces formes peuvent être élargies bien que la nature de la solution soit définie par l'une des deux formes de base. Une première proposition consiste à complexifier l'une ou l'autre des formes de bases en multipliant ces dernières par un filtre d'ordre quelconque. Ce filtre aura pour objectifs, soit de réduire localement en fréquences le gain pour éviter d'exciter des modes souples du lanceur à des fréquences particulières, soit d'apporter une atténuation en gain de la boucle à partir d'une certaine fréquence définie par le concepteur.

Bien entendu, il est tout à fait possible d'adjoindre un autre type de filtre n'ayant aucune fonction particulière si ce n'est de complexifier apparemment l'une des deux formes de base.

Sens physique et valeurs typiques des paramètres

Compte tenu de l'expression analytique des paramètres $K_v$, $\omega_1$, et $\omega_2$, il est possible d'associer pour certains d'entre eux un sens physique donné :

La pulsation $\omega_1$ est égale à $\sqrt{A_6}$ , dynamique propre du lanceur. On réalise une compensation de cette dernière. Plus précisément, on peut écrire que la pulsation $\omega_1$ est proportionnelle à la pression dynamique de l'instant de vol considéré et inversement proportionnel à l'inertie du lanceur. Sa valeur est a priori difficile à quantifier, puisque celle-ci dépend des caractéristiques du lanceur.

L'expression de la pulsation $\omega_2$ est fonction de la rapidité optée pour la boucle de pilotage. De la même manière que précédemment, il est difficile de donner une plage de valeurs numériques. Cependant qualitativement, on peut préciser que plus la valeur de $\omega_2$ sera grande, plus la boucle de pilotage sera rapide. En pratique, la rapidité de la boucle est choisie telle que cette dernière ne force pas le procédé (lanceur) au-delà de sa dynamique propre $\left(\sqrt{A_6}\right)$ .

L'expression du gain $K_v$ est relativement complexe. Outre les termes $K_1$, $A_6$, $K_p$ et $\omega_n$, il apparaît le terme d'amortissement $\zeta$, paramètre fixant la stabilité et la robustesse en stabilité de la boucle de pilotage. Qualitativement, le degré de stabilité de l'asservissement est d'autant plus important que la valeur numérique du gain $K_v$ est élevée, celui-ci étant proportionnel à $\zeta$.

Exemple

L'exemple ci-après montre l'application de la synthèse analytique d'une loi de pilotage stationnaire pour un lanceur X. Les valeurs des paramètres A6 et K1 à la pression dynamique maximale (correspondant à une trajectoire fixée) sont données par :

$$A6 = 35 \pm 15s^{-2}$$

$$K1 = 30 \pm 10s^{-2}$$

Le cas majorant pour la stabilité du lanceur correspond à :

$$A6 = A6max = 50 \text{ s-2}$$

$$K1 = K1min = 20 \text{ s-2}$$

La loi de pilotage est synthétisée à la pression dynamique maximale avec les paramètres du lanceur ci-dessus. On fixe l'amortissement de la dynamique de boucle fermée à :

$\zeta = 0.3$ (c'est l'amortissement requis correspondant au cas majorant)

Dans le but de minimiser l'incidence à la pression dynamique maximale, on fixe un gain en position nul soit :

$$Kp = 0$$

Le choix du paramètre $\omega_n$ (paramètre fixant la rapidité de l'asservissement) est déterminé en vérifiant que sa valeur permet de ne pas dépasser la vitesse et l'excursion de braquage atteignables par la gouverne. On suppose que la valeur de ωn est connue et est donnée par :

$$\omega n = 3.5\, rad/s$$

Si tel n'est pas le cas on réitère l'étape de synthèse du correcteur jusqu'à trouver une valeur de ωn compatible avec les performances de la gouverne vérifiées par simulation temporelle.

Les paramètres du correcteur sont fournis par les équations à la base de l'invention. Nous avons (pour Kp=0)

$$\omega 1 = \sqrt{A6\max} = \sqrt{50} \approx 7\, rad/s$$

$$\omega_2 = \frac{-\sqrt{A6_{\max}}\,\omega_n^{\,2}}{A6_{\max} + K_1 K_p} = \frac{-\sqrt{50}(3.5)^2}{50} \approx -1.74\, rad/s$$

$$Kv = \frac{2\zeta\omega_n A6_{\max} + \sqrt{A6_{\max}}(\omega_n^{\,2} + A6_{\max})}{K_{1\min}\omega_n^{\,2}} = \frac{2*0.3*3.5*50 + \sqrt{50}(3.5^2 + 50)}{20*3.5^2} \approx 2.23\, s^{-1}$$

L'application des formules suppose que la chaîne de pilotage n'induit pas de retard. Si cette hypothèse n'est pas vérifiée, il est nécessaire de réévaluer les expressions analytiques des paramètres du correcteur en tenant compte de la présence du retard de chaîne.

La marge de gain basse fréquence est donnée par l'expression analytique

$$M_0 = 1 + \frac{2\zeta}{x + 1/x} = 1 + \frac{2*0.3}{2 + 1/2} \approx 1.25 \text{ soit 2 dB avec } x = \frac{\sqrt{A6_{\max}}}{\omega_n} = \frac{\sqrt{50}}{3.5}$$

Une simulation temporelle montre que l'on obtient un braquage maximal de la gouverne de 5.6° et une vitesse maximale de braquage de 30°. Ces chiffres sont obtenus pour le cas majorant du point de vue de la stabilité (cas A6max,K1 min dit cas BF).

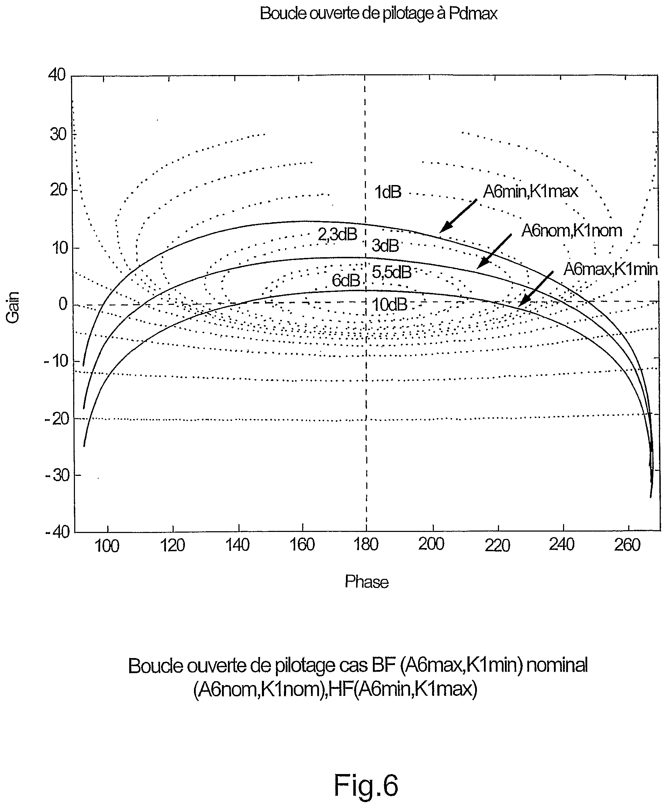

Les performances fréquentielles sont données par le figure 6. En particulier, on retrouve, par simulation, la marge de gain calculée dans le cas majorant (A6max,K1 min).

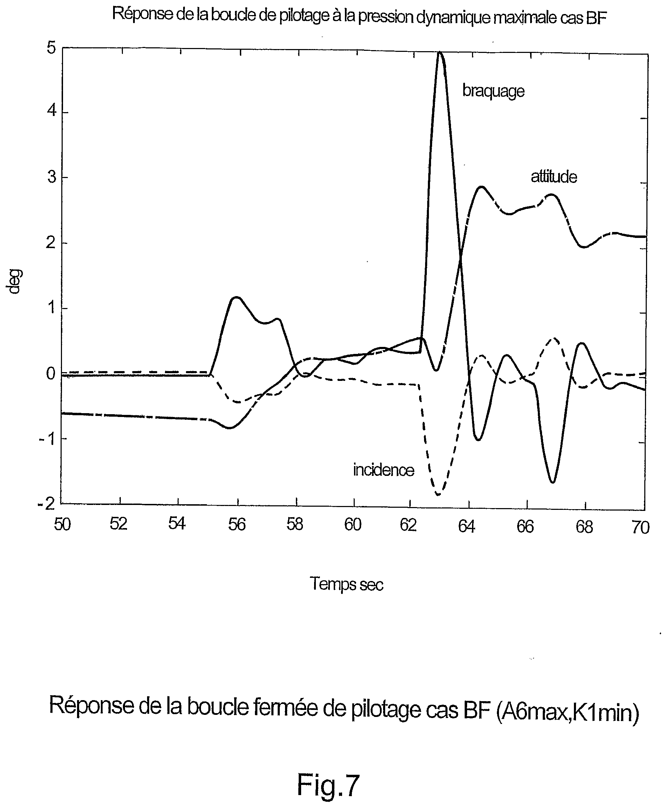

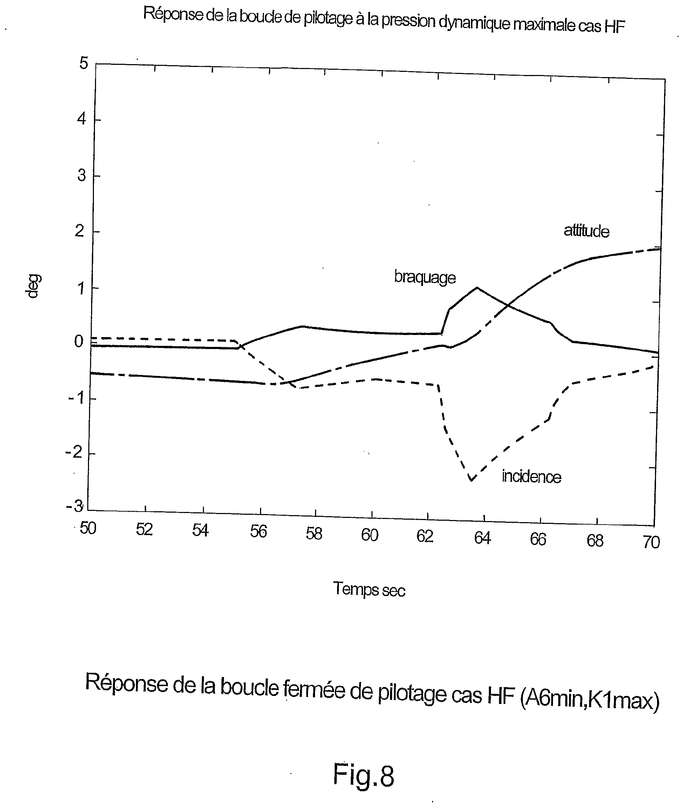

Les performances temporelles obtenues avec le réglage calculé sont données par les courbes des figures 7 et 8 »

La loi de pilotage analytique permet d'atteindre rapidement les objectifs de stabilité et de performance pour l'ensemble des lanceurs décrits par les variations des paramètres A6 et K1. Contrairement aux méthodes du type LQG ou H∞, l'itération fréquentielle, qui consiste à vérifier a posteriori les marges de stabilité, a été éliminée. L'itération temporelle, qui permet de choisir la rapidité de la boucle de pilotage, reste nécessaire car l'objectif de performance est directement lié à la nature des perturbations agissant sur le lanceur (vent, rafale, perturbations internes, ...). L'extension non stationnaire est directe et ne pose pas de problèmes particuliers du point de vue de la synthèse.

La loi de pilotage analytique peut éventuellement être étendue pour des engins autres que les lanceurs. L'étude de base montre qu'elle est élaborée à partir d'un modèle de synthèse déduit des équations de la mécanique du vol, l'hypothèse forte étant l'instabilité de l'engin. Il n'y a donc aucune limitation pour que ce type de loi puisse être applicable pour des avions instables sur un ou plusieurs axes de vol (tangage, lacet et roulis). Pour cela, il suffit d'adapter les équations de la mécanique du vol aux avions instables. Cette adaptation permettra d'obtenir un nouveau modèle de synthèse duquel on déduira les paramètres de la loi de pilotage analytique.

De manière préférée :

- on détermine pour la phase de vol des valeurs (A6max, K1min) des paramètres du terme de transfert qui majorent les perturbations extérieures ;
- on applique un test de validation par simulation aux choix du gain en attitude et des termes de rapidité et d'amortissement pendant toute la durée du vol et on applique ces choix pendant tout le vol si ces choix sont validés, sinon on décompose le temps de vol en plusieurs phases ;
- le terme de transfert est défini pour des perturbations extérieures essentiellement causées par l'air atmosphérique ;
- on applique en roulis et en lacet des lois de pilotage définies selon la même méthode que la loi de pilotage en tangage.

ANNEXE : FORMULES

$$\begin{cases} \dot{\theta} = q \\ I\dot{q} = Lf(QSC_{z\alpha}\alpha) + LtPc\beta \end{cases} \Leftrightarrow \begin{cases} \dot{\theta} = q \\ \dot{q} = A_6\alpha + K_1\beta \end{cases} \qquad (1)$$

$$mV\dot{\gamma} \approx QSC_{z\alpha}\alpha + Pc\sin(\beta + \alpha) \Rightarrow \dot{\gamma} \approx \frac{QSC_{z\alpha} + Pc}{mV}\alpha + \frac{Pc}{mV}\beta \qquad (2)$$

avec

m : masse du lanceur
Q : pression dynamique
$C_{z\alpha}$ : gradient de portance
I : inertie en tangage
S : surface de référence de l'engin pour le calcul de la force de portance
Pc : Poussée de l'engin
Lf : distance centre de gravité - foyer aérodynamique
Lt : distance centre de gravité - centre de rotation tuyère

$$\theta = \gamma + \alpha + \arctan\frac{W}{V_{air}} \approx \gamma + \alpha + \frac{W}{V_{air}} \qquad (3)$$

où

$$\dot{\theta} \approx \dot{\gamma} + \dot{\alpha} + g \qquad (4)$$

$$g = \frac{1}{V}\frac{dw}{dt} = \frac{1}{V}\frac{dw}{dz}\frac{dz}{dt} = \frac{Vz}{V}\frac{dw}{dz} \quad \text{(gradient de vent)}$$

(La vitesse Vz est la projection de la vitesse du lanceur sur l'axe vertical)

$$\begin{pmatrix} \dot{\theta} \\ \alpha \end{pmatrix} = \frac{1}{(s^2 + \frac{QSC_{z\alpha} + Pc}{mV}s - A_6)}\begin{bmatrix} K_1 + \frac{1}{s}\frac{QSC_{z\alpha}K_1 + (K_1 - A_6)Pc}{mV} & -\frac{A_6}{V} \\ K_1 - \frac{Pc}{mV}s & -\frac{s^2}{V} \end{bmatrix}\begin{pmatrix} \beta \\ w \end{pmatrix} \qquad (5)$$

$$\frac{Pc}{K_1 mV}\omega \text{ et} \frac{QSC_{z\alpha}K_1 + (K_1 - A_6)Pc}{mV\omega}$$

$$(C)$$

$$\begin{pmatrix} \theta \\ \alpha \end{pmatrix} = \frac{1}{(s^2 - A_6)} \begin{bmatrix} K_1 & -\dfrac{A_6}{V} \\ K_1 & -\dfrac{s^2}{V} \end{bmatrix} \begin{pmatrix} \beta \\ w \end{pmatrix} \qquad (6)$$

$$G' = \frac{\theta}{\beta} = \frac{(1 - \tau s/2)}{(1 + \tau s/2)} \frac{K_1}{s^2 - A_6} \qquad (7)$$

$$\left. \begin{aligned} K_v &= \frac{2\zeta\omega_n(A_6 + K_1 K_p) + \sqrt{A_6}(\omega_n^2 + A_6) + \sqrt{A_6} K_1 K_p}{K_1 \omega_n^2} \\ \omega_1 &= \sqrt{A_6} \\ \omega_2 &= -\frac{\sqrt{A_6}\,\omega_n^2}{A_6 + K_1 K_p} \end{aligned} \right\} \qquad (8)$$

$$M_0 = 1 + \frac{2\zeta\left(\sqrt{A_6}\,\omega_n + \dfrac{\omega_n}{\sqrt{A_6}} K_1 K_p\right)}{\omega_n^2 + A_6 + K_1 K_p} > 1 \qquad (9)$$

$$M_0(K_p = 0) = 1 + \frac{2\zeta\omega_n\sqrt{A_{60}}}{A_{60} + \omega_n^2} = 1 + \frac{2\xi}{x + 1/x} \quad avec\ x = \frac{\sqrt{A_{60}}}{\omega_n} \qquad (10)$$

$$M_0(K_p = 0, \omega_n = \sqrt{A_6}) = 1 + \zeta \qquad (11)$$

$$\hat{\dot{\theta}} = \theta \frac{s}{(s^2/wc^2 + s/wc + 1)} \qquad (12)$$

$$\beta = (Kp\theta + Kv\dot{\theta})\frac{(s+\omega_1)}{(s+\omega_2)} \text{ (loi avec retours de vitesse } \dot{\theta} \text{ et d'attitude } \theta) \qquad (13)$$

$$\beta = \theta\frac{(Kp + sKv)}{(s^2/wc^2 + s/wc + 1)}\frac{(s+\omega_1)}{(s+\omega_2)} \text{ (loi sans retour de vitesse } \dot{\theta}) \qquad (14)$$

**Revendications**

1. Procédé de pilotage en vol d'un engin propulsé muni d'un actionneur orientable, asservi en attitude sur une trajectoire et soumis à des perturbations extérieures selon lequel, au moins en tangage:

   - on définit au préalable une loi de pilotage comportant un terme correcteur du premier ordre, un terme de transfert comportant des paramètres caractéristiques de l'engin et des perturbations extérieures ($A_6$, $K_1$), un gain en attitude ($K_p$) et un gain en vitesse d'attitude ($K_v$);
   - on définit au préalable des relations de corrélation entre le gain en vitesse d'attitude et les paramètres du terme correcteur en fonction du gain en attitude, des paramètres du terme de transfert de l'engin et de deux termes représentant des consignes de rapidité ($\omega_n$) et d'amortissement ($\zeta$), et
   - pour au moins une phase de vol de l'engin, on détermine des valeurs des paramètres du terme de transfert et on choisit le gain en attitude et les termes de rapidité et d'amortissement, on en déduit les paramètres du terme correcteur et le gain en vitesse, et on applique à l'actionneur la loi de pilotage avec ces valeurs des paramètres.

2. Procédé selon la revendication 1, **caractérisé en ce qu'**on définit les lois de corrélation à partir d'un développement limité de l'équation de la boucle fermée constituée par l'engin et son actionneur.

3. Procédé selon la revendication 1 ou 2, **caractérisé en ce qu'**on détermine pour la phase de vol des valeurs (A6max, K1min) des paramètres du terme de transfert qui majorent les perturbations extérieures.

4. Procédé selon l'une quelconque des revendications 1 à 3, **caractérisé en ce qu'**on prévoit en outre dans la loi de pilotage un filtre.

5. Procédé selon l'une quelconque des revendications 1 à 4, **caractérisé en ce qu'**on applique la loi de pilotage en utilisant des mesures de l'attitude et de la vitesse en attitude.

6. Procédé selon l'une quelconque des revendications 1 à 4, **caractérisé en ce qu'**on applique la loi de pilotage en utilisant un filtre estimateur de vitesse d'attitude dans la loi de pilotage.

7. Procédé selon l'une quelconque des revendications 1 à 6, **caractérisé en ce qu'**on applique un test de validation par simulation aux choix du gain en attitude et des termes de rapidité et d'amortissement pendant toute la durée du vol et on applique ces choix pendant tout le vol si ces choix sont validés, sinon on décompose le temps de vol en plusieurs phases.

8. Procédé selon l'une quelconque des revendications 1 à 7, **caractérisé en ce que** le terme de transfert est défini pour des perturbations extérieures essentiellement causées par l'air atmosphérique.

9. Procédé selon l'une quelconque des revendications 1 à 8, **caractérisé en ce que** la loi de pilotage comporte en outre un terme de retard.

10. Procédé selon l'une quelconque des revendications 1 à 9, **caractérisé en ce qu'**on applique en roulis et en lacet des lois de pilotage définies selon la même méthode que la loi de pilotage en tangage.

11. Dispositif de pilotage adapté à la mise en oeuvre du procédé selon l'une quelconque des revendications 1 à 10 comportant une entrée recevant au moins une mesure en attitude de tangage, une sortie destinée à appliquer une commande d'un actionneur, au moins une boucle d'asservissement en tangage connectée entre cette entrée et cette sortie et comportant un filtre correcteur du premier ordre, un terme de transfert comportant des paramètres caractéristiques de l'engin et des perturbations extérieures, un gain en attitude et un gain en vitesse d'attitude.

**Patentansprüche**

1. Verfahren zum Steuern einer angetriebenen Rakete im Flug, welche mit einem verstellbaren Triebwerk versehen ist, welche in einer Haltung auf eine Bahnkurve gezwungen wird und externen Störungen unterworfen ist, wobei wenigstens in Nickrichtung:

   - zuvor ein Steuergesetz definiert wird, welches einen Korrekturterm erster Ordnung, einen charakteristischen Parameter der Rakete und externe Störungen ($A_6$, $K_1$) umfassenden Transferterm, eine Haltungszunahme ($K_P$) und eine Haltungs-Geschwindigkeitszunahme ($K_V$) umfasst;
   - zuvor Korrelationsverhältnisse zwischen der Haltungs-Geschwindigkeitszunahme und den Parametern des Korrekturterms als Funktion der Haltungszunahme, den Parametern des Transferterms der Rakete und von zwei Termen definiert werden, welche Sollwerte der Rapidität ($\omega_n$) und der Dämpfung ($\zeta$) repräsentieren, und
   - für wenigstens eine Phase des Flugs der Rakete Werte der Parameter des Transferterms bestimmt werden und die Haltungszunahme und die Terme der Rapidität und der Dämpfung ausgewählt werden, hieraus die Parameter des Korrekturterms und die Geschwindigkeitszunahme abgeleitet werden, und auf das Triebwerk das Steuerungsgesetz mit diesen Werten der Parameter angewendet wird.

2. Verfahren nach Anspruch 1, **dadurch gekennzeichnet, dass** die Korrelationsgesetze ausgehend von einer beschränkten Entwicklung der Gleichung des Regelkreises definiert werden, welcher durch die Rakete und ihr Triebwerk gebildet ist.

3. Verfahren nach Anspruch 1 oder 2, **dadurch gekennzeichnet, dass** für die Phase des Flugs Werte (A6max, K1min) der Parameter des Transferterms bestimmt werden, welche die externen Störungen erhöhen.

4. Verfahren nach einem der Ansprüche 1 bis 3, **dadurch gekennzeichnet, dass** ferner in dem Steuerungsgesetz ein Filter vorgesehen wird.

5. Verfahren nach einem der Ansprüche 1 bis 4, **dadurch gekennzeichnet, dass** das Steuerungsgesetz unter Verwendung von Messungen der Haltung und der Haltungsgeschwindigkeit angewendet wird.

6. Verfahren nach einem der Ansprüche 1 bis 4, **dadurch gekennzeichnet, dass** das Steuerungsgesetz unter Verwendung eines Schätzfilters der Haltungsgeschwindigkeit in dem Steuerungsgesetz angewendet wird.

7. Verfahren nach einem der Ansprüche 1 bis 6, **dadurch gekennzeichnet, dass** ein Validierungstest durch Simulation auf die Auswahlen der Haltungszunahme und die Terme der Rapidität und der Dämpfung während der gesamten Dauer des Flugs angewendet wird, und diese Auswahlen während des gesamten Flugs angewendet werden, wenn die Auswahlen validiert werden, und falls nicht die Flugzeit in mehrere Phasen aufgeteilt wird.

8. Verfahren nach einem der Ansprüche 1 bis 7, **dadurch gekennzeichnet, dass** der Transferterm für externe Störungen definiert wird, welche im Wesentlichen durch atmosphärische Luft hervorgerufen werden.

9. Verfahren nach einem der Ansprüche 1 bis 8, **dadurch gekennzeichnet, dass** das Steuerungsgesetz ferner einen Retardierungsterm umfasst.

10. Verfahren nach einem der Ansprüche 1 bis 9, **dadurch gekennzeichnet, dass** für die Roll- und die Gierrichtung Steuerungsgesetze angewendet werden, welche gemäß demselben Verfahren definiert werden wie das Steuerungsgesetz für die Nickrichtung.

11. Steuerungsvorrichtung, welche dazu eingerichtet ist, das Verfahren nach einem der Ansprüche 1 bis 10 durchzuführen, umfassend einen Eingang, welcher wenigstens eine Messung einer Nickhaltung empfängt, einen Ausgang, welcher dazu eingerichtet ist, eine Anweisung eines Triebwerks anzuwenden, wenigstens eine Regelungsschleife für die Nickrichtung, welche zwischen dem Eingang und dem Ausgang verbunden ist und einen Korrekturfilter erster Ordnung umfasst, wobei ein Transferterm einen charakteristischen Parameter der Rakete und externe Störungen, eine Haltungszunahme und eine Haltungs-Geschwindigkeitszunahme umfasst.

**Claims**

1.  Method for the in-flight control of a propelled craft provided with a steerable actuator, with attitude control on a trajectory and subjected to external disturbances, which consists, at least when pitching, in:

    - firstly defining a control law including a first order correction term, a transfer term comprising parameters characteristic of the craft and of the external disturbances ($A_6$, $K_1$), an attitude gain ($K_p$) and an attitude speed gain ($K_v$);
    - firstly defining correlating relationships between the attitude speed gain and the parameters of the correction term as a function of the attitude gain, of the parameters of the transfer term of the craft and of two terms representing rapidity ($\omega_n$) and damping ($\zeta$) setpoints, and
    - for at least one flight phase of the craft, determining values of the parameters of the transfer term and selecting the attitude gain and the rapidity and damping terms, deducing therefrom the parameters of the correction term and the speed gain, and applying the control law with these parameter values to the actuator.

2.  Method according to claim 1, **characterised in that** the correlation laws are defined based on a limited development of the equation of the closed loop constituted by the craft and the actuator thereof.

3.  Method according to either claim 1 or claim 2, **characterised in that** values (A6max, K1min) of the parameters of the transfer term, which increase the external disturbances, are determined for the flight phase.

4.  Method according to any of claims 1 to 3, **characterised in that** a filter is also provided for in the control law.

5.  Method according to any of claims 1 to 4, **characterised in that** the control law is applied by using attitude measurements and attitude speed measurements.

6.  Method according to any of claims 1 to 4, **characterised in that** the control law is applied by using a filter estimating the attitude speed in the control law.

7.  Method according to any of claims 1 to 6, **characterised in that** a validation test is applied by simulation to the attitude gain and rapidity and damping term selections throughout the flight duration and said selections are applied throughout the flight if said selections are validated; otherwise, the time-of-flight is broken down into a plurality of phases.

8.  Method according to any of claims 1 to 7, **characterised in that** the transfer term is defined for external disturbances essentially caused by atmospheric air.

9.  Method according to any of claims 1 to 8, **characterised in that** the control law further comprises a delay term.

10. Method according to any of claims 1 to 9, **characterised in that** control laws defined according to the same method as the pitch control law are applied when rolling and when yawing.

11. Control device suitable for implementing the method according to any of claims 1 to 10 comprising an input receiving at least one pitch attitude measurement, an output intended to apply a command of an actuator, at least one pitch loop connected between said input and said output and comprising a first order correction filter, a transfer term comprising parameters characteristic of the craft and of the external disturbances, an attitude gain and an attitude speed gain.

# Fig.1

Tièdre
Aérodynamique

Zone de dépression

Effort résultant

Axe de l'engin

Portance

Zone de surpression
(pression dynamique)

α

Direction du vecteur
vitesse

Traînée

# Fig.2

Vent

θ

Mesure d'attitude

Mesure de la vitesse
d'attitude

Asservissement en
Position
(actionneur hydraulique
ou électrique)

Tuyère

Mesure de la position de
l'actionneur

β

Consigne en position
de l'actionneur de la
gouverne

Algorithme
de
pilotage

$\dot{\theta}$

Gyromètre

θ

Centrale inertielle

Consigne
d'attitude

θ₀

Direction
poussée

Axe engin

Direction
⊥ vitesse air

$\beta$

F

$\alpha$

Vitesse air

$\vec{w}$

Vitesse sol

$\theta$

$\gamma$

G

$\beta$

## Fig.3

# Fig.4

$+$ $\bigotimes$ $-$ → $\dfrac{s + \omega_1}{s + \omega_2}$ → $e^{-\tau s}$ → $\dfrac{K_1 s}{s^2 - A_6}$ $\dot{\theta}$ $\dfrac{1}{s}$ $\theta$

$K_v$

$K_p$

$-$ $\bigotimes$ $+$ ← $\theta c$

$+$ $\bigotimes$ $-$ → $\dfrac{K_p + s K_v}{s^2 / wc + s / wc + 1}$ → $\dfrac{s + \omega_1}{s + \omega_2}$ → $e^{-\tau s}$ → $\dfrac{K_1}{s^2 - A_6}$ $\theta$

Loi de pilotage analytique mono-bouclage

## Fig.5

Boucle ouverte de pilotage à Pdmax

Boucle ouverte de pilotage cas BF (A6max,K1min) nominal
(A6nom,K1nom),HF(A6min,K1max)

## Fig.6

Réponse de la boucle de pilotage à la pression dynamique maximale cas BF

Réponse de la boucle fermée de pilotage cas BF (A6max,K1min)

Fig.7

Réponse de la boucle de pilotage à la pression dynamique maximale cas HF

Temps sec

Réponse de la boucle fermée de pilotage cas HF (A6min,K1max)

Fig.8

**EP 1 570 326 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4659035 A